# EUROPEAN PATENT APPLICATION

(11) **EP 2 368 744 A2**
(43) Date of publication of application: **28.09.2011**
(21) Application number: 11250185.3
(22) Date of filing: 17.02.2011
(51) Int. Cl.: B60L 1/00, B60L 9/00, B60L 15/20

(54) **Traction system for trainset**

(30) Priority: 23.03.2010 JP 2010065418
(71) Applicant: Hitachi, Ltd., Chiyoda-ku Tokyo 100-8280 (JP)
(72) Inventor: Shimada, Motomi, Tokyo 100-8220 (JP); Kaneko, Takashi, Tokyo 100-8220 (JP); Mochizuki, Kento, Tokyo 100-8220 (JP); Nakamura, Takayoshi, Tokyo 100-8220 (JP); Shinomiya, Takeshi, Tokyo 100-8220 (JP)
(74) Representative: Paget, Hugh Charles Edward

(57) **Abstract**

The invention provides a traction system for a trainset, especially equipped with a plurality of power feeding means and having a function for effectively selecting a traction system as destination of supply of power obtained from these means in order to enhance the redundancy of the traction system of the train. The trainset comprises a plurality of power generating means, wherein the plurality of power generating means are connected via a plurality of power feeding means. The trainset further comprises a first selector for outputting power to any one of the plurality of power feeding means or a number of arbitrary power feeding means. An inverter means constituting the traction system further comprises a second selector capable of arbitrarily selecting a power system for receiving the power from the plurality of power feeding means. Similarly, an auxiliary power supply means constituting the traction system comprises a third selector capable of arbitrarily selecting a power system for receiving the power from the plurality of power feeding means.

## Description

### BACKGROUND OF THE INVENTION

### Field of the invention

The present invention relates to a traction system for a trainset, and more specifically, to the art for enhancing the redundancy of the traction system for a trainset.

### Description of the related art

Trains must have power sources for providing traction thereto, and during operation of the trains, it is important that the power sources and traction systems operate soundly and continuously for providing traction for driving the train and rotating the wheels using the power sources.

The following two types of traction sources are generally conceivable for driving the train.
(1) Power is supplied to the train from a power generating facility on the ground via power feeding facilities such as overhead contact lines (electric rolling stock).
(2) Engines etc. are disposed on the train (internal combustion rolling stock).

If the traction source is electric power, the electric power fed via power feeding facilities such as overhead contact lines is used to drive a motor via traction converters or the like to create tractive effort between the wheels and the rails. If the traction source is an engine disposed on the train, either the electric power generated by driving a power generator via the engine drives a motor via an AC/DC converter or the like to create tractive effort between the wheels and the rails, or the shaft output of the engine is controlled via a transmission or the like to drive the wheels directly and to create tractive effort between the wheels and the rails.

In a traction-concentrated type of trainset only having a single traction source within the trainset (a power supplying facility such as overhead contact lines or an AC/DC converter in the case of the electric rolling stock, and an engine and a power generator in the case of the internal combustion rolling stock), the train cannot continue operation when the traction source malfunctions, since power required to drive the train cannot be obtained. One possible system for enabling continuous operation of the train even if the traction source of the train malfunctions is a system having a plurality of traction sources disposed on the trainset.

Japanese patent No. 4184879 (patent document 1) discloses a traction system for a railway vehicle related to the configuration and control method of a traction-concentrated trainset having multiple traction sources disposed on the train.

Fig. 7 shows a configuration of a traction system for a railway vehicle shown in Fig. 1 of patent document 1. The traction system for a railway vehicle comprises a first railway vehicle 101 equipped with a generation means 110, a power converter 120 and a driving motor, a second railway vehicle 102 equipped with a power converter 120, a driving motor and a power storage means 150, a power transmission means 140 connecting each means, and a power management means 200 for controlling the power generation of the generating means 110 and the power storage of the power storage means 150, wherein the power storage means 150 stores power and regenerated power generated by the generation means 110, and the driving motor is driven by the power converter 120 with the generation means 110 and the power storage means 150 as power sources to thereby drive the railway vehicle.

As described, according to the traction system for a railway vehicle illustrated in Fig. 1 of patent document 1, the railway vehicle is driven by supplying power from the first railway vehicle equipped with the generating means 110 to the second railway vehicle 102 equipped with the power converter 120, the driving motor and the power storage means 150, which is a traction system similar to that of the electric rolling stock.

According to the traction system for a railway vehicle disclosed in patent document 1, two power sources, the generating means 110 and the power storage means, are disposed as power source, so that even if the generating means 110 malfunctions, the power stored in the power storage means can be used to operate the power converter 120, to thereby drive the driving motor and continue operation. In that case, however, the number of the power storage means 150 disposed on a train and the amount of power capable of being stored in the power storage means 150 are limited, so that the distance in which the railway vehicle can continue driving operation is restricted. Furthermore, even if the generating means 110 is operating soundly, if failure occurs to the power transmission means for transmitting the power generated via the generating means 110 to the power converter 120 and the malfunction occurs at a location where power cannot be transmitted to all the power converters 120 (such as immediately subsequent to the generating means), it becomes difficult to continue driving operation of the railway vehicle.

### SUMMARY OF THE INVENTION

The present invention aims at providing a traction system for a trainset comprising a plurality of power feeding means, which is capable of enhancing the redundancy of the traction system of railway vehicles.

The invention provides a plurality of power supplies on a trainset, wherein the plurality of power supplies are connected via a plurality of power feeding means. In order to output power from the respective power supplies to the plurality of power feeding means, a first selector is disposed for outputting power to any one of the plurality of power feeding means or a number of arbitrary power feeding means. An inverter means constituting the traction system further comprises a second selector capable of selecting a power system for receiving the power arbitrarily from the plurality of power feeding means. Similarly, an auxiliary power supply means constituting the traction system comprises a third selector capable of selecting a power system for receiving the power arbitrarily from the plurality of power feeding means.

According further to the present invention, the ratio of load of the power generated via the plurality of power generating means can be varied in response to the amount of power required within the whole trainset.

The present invention enables to provide a traction system for a trainset comprising a plurality of power feeding means, realizing a highly efficient traction system for a trainset having a high redundancy.

### BRIEF DESCRIPTION OF THE DRAWINGS

Fig. 1 is a view showing the configuration according to a preferred embodiment of a traction system of a railway car of the present invention;
Fig. 2 is a view illustrating the details of a first selector according to one preferred embodiment of the present invention;
Fig. 3 is a view showing the details of a second and a third selector according to one preferred embodiment of the present invention;
Fig. 4 is a view showing a first system for supplying power to a traction inverter and an auxiliary power supply system according to one preferred embodiment of the present invention;
Fig. 5 is a view showing a second system for supplying power to a traction inverter and an auxiliary power supply system according to one preferred embodiment of the present invention;
Fig. 6 is a view showing a third system for supplying power to a traction inverter and an auxiliary power supply system according to one preferred embodiment of the present invention; and

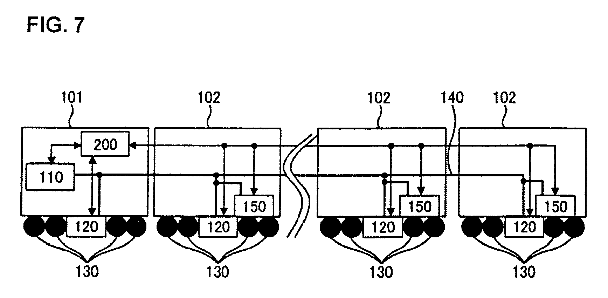

Fig. 7 is a view showing a traction system for a railway car according to the prior art.

### DETAILED DESCRIPTION OF THE PREFERRED EMBODIMENTS

### [Embodiments]

Now, the preferred embodiments of the present invention will be described in detail with reference to the drawings.

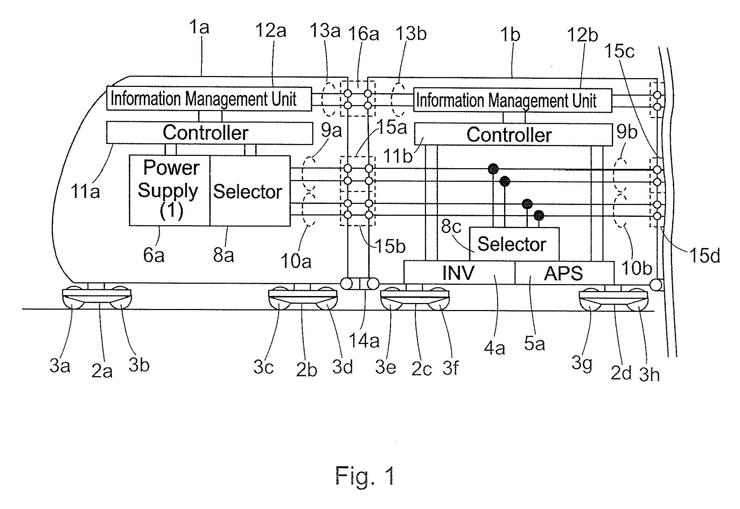

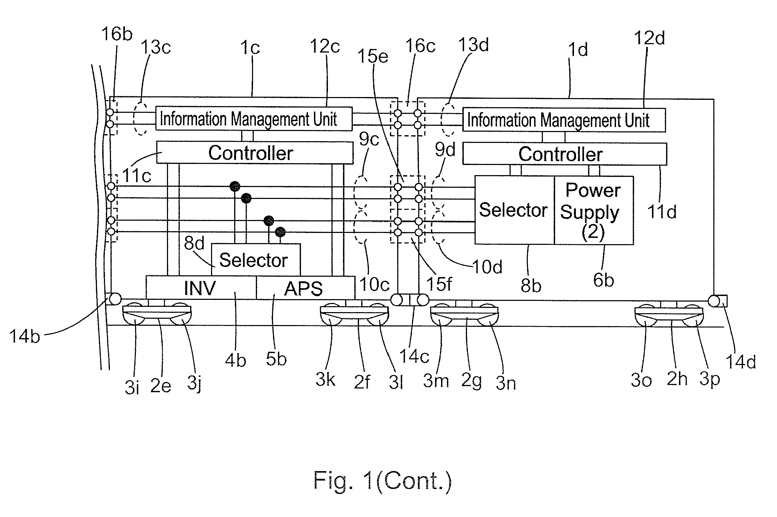

Fig. 1 is a view showing a configuration according to one preferred embodiment of the traction system of a railway car according to the present invention.

Cars 1a, 1b, 1c and 1d are a part of the cars constituting a trainset. A coupler 14a is disposed on the car 1a, a coupler 14b is disposed on the car 1b, a coupler 14c is disposed on the car 1c, and a coupler 14d is disposed on the car 1d, wherein the cars 1a and 1b are connected via the coupler 14a, the cars 1b and 1c are connected via the coupler 14b, the cars 1c and 1d are connected via the coupler 14c, and the car 1d and the following car are connected via the coupler 14d.

The car 1a is supported on the surface of rails not shown through a bogie 2a via wheelset 3a and 3b, and through a bogie 2b via wheelset 3c and 3d. The car 1b is supported on the surface of rails not shown through a bogie 2c via wheelset 3e and 3f, and through a bogie 2d via wheelset 3g and 3h. The car 1c is supported on the surface of rails not shown through a bogie 2e via wheelset 3i and 3j, and through a bogie 2f via wheelset 3k and 31. The car 1d is supported on the surface of rails not shown through a bogie 2g via wheelset 3m and 3n, and through a bogie 2h via wheelset 3o and 3p.

Now, the configuration of components disposed respectively on the cars 1a, 1b, 1c and 1d are described.

First, the configuration of the car 1a will be described.

The car 1a is equipped with a power supply 6a, a selector 8a, a traction system control unit 11a, an information management unit 12a, a power feeding means (A) 9a, a power feeding means (B) 10a, and an information transmission apparatus 13a.

The power supply 6a supplies power to a traction system disposed on the trainset. The traction system on the trainset is a necessary equipment for driving the train, that is, accelerating and decelerating the train and transporting the customers safely and comfortably, representative examples of which are traction inverters 4a and 4b and auxiliary power supply systems 5a and 5b described in detail later. The supply of power from the power supply 6a to the traction system is performed via the power feeding means (A) 9a and the power feeding means (B) 10a. The adjacent car 1b is also equipped with a power feeding means (A) 9b and a power feeding means (B) 10b similar to car 1a, wherein the power feeding means (A) 9a and 9b are connected via a power feeding means coupler 15a, and the power feeding means (B) 10a and 10b are connected via a power feeding means coupler 15b.

The path for supplying power from the power supply 6a to the traction system is composed of both the power feeding means (A) 9a and power feeding means (B) 10a, or either only the power feeding means (A) 9a or the power feeding means (B) 10a. These three lines of power supply paths can be selected via a selector 8a.

The traction system control unit 11a controls the power output from the power supply 6a, and controls the operation of switching devices 23a and 23b not shown (both disposed within the selector 8a) so as to select the path for supplying power to the traction system via the selector 8a mentioned earlier.

The information management unit 12a provides a control order to the traction system control unit 11a, and collects the status information acquired by the traction system control unit 11a. Moreover, the information management unit 12a is connected with the information management unit 12b disposed on the adjacent car 1b via information transmission apparatuses 13a and 13b. Similarly, the information management unit 12b is connected with the information management unit 12c disposed on the car 1c via information transmission apparatuses 13b and 13c, and the information management unit 12c is connected with the information management unit 12d disposed on the car 1d via information transmission apparatuses 13c and 13d. Thus, the information management unit 12a can share information with information management units 12b, 12c and 12d on the other cars within the trainset via the information transmission apparatuses 13a, 13b, 13c and 13d.

Next, the configuration of car 1d will be described.

The car 1d is equipped with a power supply 6b, a selector 8b, a traction system control unit 11d, an information management unit 12d, a power feeding means (A) 9d, a power feeding means (B) 10d, and an information transmission apparatus 13d.

The power supply 6b supplies power to the traction system disposed within the trainset. The traction system on the trainset is a necessary equipment for operating the train, that is, accelerating and decelerating the train and transporting the customers safely and comfortably, representative examples of which are traction inverters 4a and 4b and auxiliary power supply systems 5a and 5b described in detail later. The supply of power from the power supply 6b to the traction system is performed via the power feeding means (A) 9d and the power feeding means (B) 10d. The adjacent car 1c is also equipped with a power feeding means (A) 9c and a power feeding means (B) 10c similar to car 1b, wherein the power feeding means (A) 9d and 9c are connected via a power feeding means coupler 15c, and the power feeding means (B) 10d and 10c are connected via a power feeding means coupler 15c.

The path for supplying power from the power supply 6b to the traction system is composed of both the power feeding means (A) 9d and power feeding means (B) 10d, or either only the power feeding means (A) 9d or the power feeding means (B) 10d. These three lines of power supply paths can be selected via a selector 8b.

The traction system control unit 11d controls the power output from the power supply 6b, and controls the operation of switching devices 23a and 23b not shown (both disposed within the selector 8b) so as to select the path for supplying power to the traction system via the selector 8b mentioned earlier.

The information management unit 12d provides a control order to the traction system control unit 11d, and collects the status information acquired by the traction system control unit 11d. Moreover, the information management unit 12d is connected with the information management unit 12c disposed on the adjacent car 1c via information transmission apparatuses 13d and 13c.

Similarly, the information management unit 12c is connected with the information management unit 12b disposed on the car 1b via information transmission apparatuses 13c and 13b, and the information management unit 12b is connected with the information management unit 12a disposed on the car 1a via information transmission apparatuses 13b and 13a. Thus, the information management unit 12d can share information with information management units 12c, 12b and 12a on the other cars within the trainset via the information transmission apparatuses 13d, 13c, 13b and 13a.

Next, the configuration of car 1b will be described.

The car 1b is equipped with a traction inverter 4a, an auxiliary power supply system 5a, a selector 8c, a traction system control unit 11b, an information management unit 12b, a power feeding means (A) 9b, a power feeding means (B) 10b and an information transmission apparatus 13b.

The traction inverter 4a converts the DC power supplied from both the power feeding means (A) 9b and the power feeding means (B) 10b or from either only the power feeding means (A) 9b or the power feeding means (B) 10b into three-phase AC power, and drives a motor not shown. The output from the motor drives all or one of the wheelsets 3e, 3f, 3g and 3h via a traction transmission apparatus not shown, and provides accelerating force or decelerating force to the car 1b.

The auxiliary power supply system 5a converts the DC power supplied from both the power feeding means (A) 9b and the power feeding means (B) 10b or from either only the power feeding means (A) 9b or the power feeding means (B) 10b into three-phase AC power for supplying power to the auxiliaries required for train operation. The auxiliaries required for the train operation are mainly the interior lighting, air conditioning and information apparatuses. Many of these auxiliaries comply with commercial AC power source specifications (three-phase AC power of approximately 400 V) , and so the output of the auxiliary power supply system 5a also assumes an output of three-phase AC power of approximately 400 V. Moreover, the aforementioned commercial AC power source can also be used to charge a battery after DC conversion so as to enable use thereof as a control power source for control units such as a traction system control unit 11 or an information management unit 12.

The power for operating the traction inverter 4a are supplied from both the power feeding means (A) 9b and the power feeding means (B) 10b or from either one of the power feeding means (A) 9b or from the power feeding means (B) 10b, wherein these three power feeding paths are selected via a selector 8c. Similarly, the three power feedings paths for operating the auxiliary power supply system 5a are also selected via the selector 8c.

A traction system unit 11b controls a traction inverter 4a for driving a motor not shown and an auxiliary power supply system 5a for supplying power to the auxiliaries, and also controls the operations of switching devices 23c, 23d, 23e and 23f (which are all disposed within the selector 8c) for selecting a path via the selector 8c for supplying power to the traction system.

The information management unit 12b provides a control order to the traction system control unit 11b, and collects the status information acquired by the traction system control unit 11b. Moreover, the information management unit 12b is connected with the information management unit 12a disposed on the adjacent car 1a via information transmission apparatuses 13b and 13a. Similarly, the information management unit 12b is connected with the information management unit 12c disposed on the car 1c via information transmission apparatuses 13b and 13c, and the information management unit 12c is connected with the information management unit 12d disposed on the car 1d via information transmission apparatuses 13c and 13d. Thus, the information management unit 12b can share information with information management units 12a, 12c and 12d on the other cars within the trainset via the information transmission apparatuses 13a, 13b, 13c and 13d.

Next, the configuration of car 1c will be described.

The car 1c is equipped with a traction inverter 4b, an auxiliary power supply system 5b, a selector 8d, a traction system control unit 11c, an information management unit 12c, a power feeding means (A) 9c, a power feeding means (B) 10c and an information transmission apparatus 13c.

The traction inverter 4b converts the DC power supplied from both the power feeding means (A) 9c and the power feeding means (B) 10c or from either only the power feeding means (A) 9c or the power feeding means (B) 10c into three-phase AC power, and drives a motor not shown. The output from the motor drives all or one of the wheelsets 3i, 3j, 3k and 31 via a traction transmission apparatus not shown, and provides accelerating force or decelerating force to the car 1c.

The auxiliary power supply system 5b converts the DC power supplied from both the power feeding means (A) 9c and the power feeding means (B) 10c or from either only the power feeding means (A) 9c or the power feeding means (B) 10c into three-phase AC power for supplying power to the auxiliaries required for train operation. The auxiliaries required for train operation are mainly the interior lighting, air conditioning and information apparatuses. Many of these auxiliaries comply with commercial AC power source specifications (three-phase AC power of approximately 400 V), and so the output of the auxiliary power supply system 5a also assumes an output of three-phase AC power of approximately 400 V. Moreover, the aforementioned commercial AC power source can also be used to charge a battery after DC conversion so as to enable use thereof as a control power source for control units such as a traction system control unit 11 or an information management unit 12.

The power for operating the traction inverter 4b is supplied from both the power feeding means (A) 9c and the power feeding means (B) 1c or from either one of the power feeding means (A) 9c or the power feeding means (B) 10d, wherein these three power feeding paths are selected via a selector 8d. Similarly, the three power feedings paths for operating the auxiliary power supply system 5b are selected via the selector 8d.

A traction system unit 11c controls a traction inverter 4b for driving a motor not shown and an auxiliary power supply system 5b for supplying power to the auxiliaries, and also controls the operations of switching devices 23c, 23d, 23e and 23f (which are all disposed within the selector 8d) for selecting a path via the selector 8d for supplying power to the traction system.

The information management unit 12c provides a control order to the traction system control unit 11c, and collects the status information acquired by the traction system control unit 11c. Moreover, the information management unit 12c is connected with the information management unit 12d disposed on the adjacent car 1d via information transmission apparatuses 13c and 13d. Similarly, the information management unit 12c is connected with the information management unit 12b disposed on the car 1b via information transmission apparatuses 13c and 13b, and the information management unit 12b is connected with the information management unit 12a disposed on the car 1a via information transmission apparatuses 13b and 13a. Thus, the information management unit 12c can share information with information management units 12a, 12b and 12d on the other cars within the trainset via the information transmission apparatuses 13a, 13b, 13c and 13d.

The power supply system for driving the trainset according to the present invention assumes use of the following generally adopted systems:
(1) a power collector for collecting power supplied to the car from a power generating facility on the ground via a power feeding equipment such as overhead contact lines; and
(2) an engine generator generating power using light oil or the like disposed on the train as fuel.
However, if future technical innovations realize improved equipment specifications such as energy densities and power densities, the following systems may be used:
(3) a fuel battery system generating power using hydrogen or the like disposed on the train as fuel; and
(4) an energy storage system such as lithium ion battery disposed on the train.

Further, the multiple power supplies 6a and 6b according to the present invention can adopt a single type of above-mentioned traction power supply systems, but they can also adopt different types of traction power supply systems for a part or all of the multiple power supplies 6a and 6b. When different types of traction power supply systems are adopted, it becomes possible to reduce the risk of having power from the multiple traction power supply systems stopping simultaneously. For example, if a power collector is adopted as one traction power supply system and an engine power generator is adopted as the other traction power supply system, the trainset can be driven in the section having no power feeding facility such as overhead contact lines via power supplied from the engine power generator, and the trainset can also be driven via power from the engine power generator when abnormality occurs to the overhead contact lines.

According to the present invention, multiple power supplies are provided to the trainset and the aforementioned multiple power supplies can be connected via multiple power feeding means, wherein the respective power supplies can be selected to output power to any one of the plurality of power feeding means or a number of arbitrary selected power feeding means via a first selector when outputting power to the multiple power feeding means. Further, the inverter means constituting the traction system can select a power system for feeding power thereto from the multiple power feeding means arbitrarily via a second selector. Moreover, the auxiliary power supply means constituting the traction system can select a power system for feeding power thereto from the multiple power feeding means arbitrarily via a third selector.

According further to the present invention, the ratio of load of the power generated by the multiple power supply means can be varied in response to the amount of power required for the whole trainset. Therefore, if the amount of power required for the whole trainset is extremely small, one certain power supply can supply all the power required for the trainset and the other power supplies can be stopped, so that the loss caused by the operation of the other power supplies can effectively be reduced.

In other words, by providing a function to the traction system for a trainset having multiple power feeding means for effectively selecting a traction system which is the supply destination of power obtained via the multiple power feeding means, it becomes possible to provide a highly efficient traction system having a high redundancy.

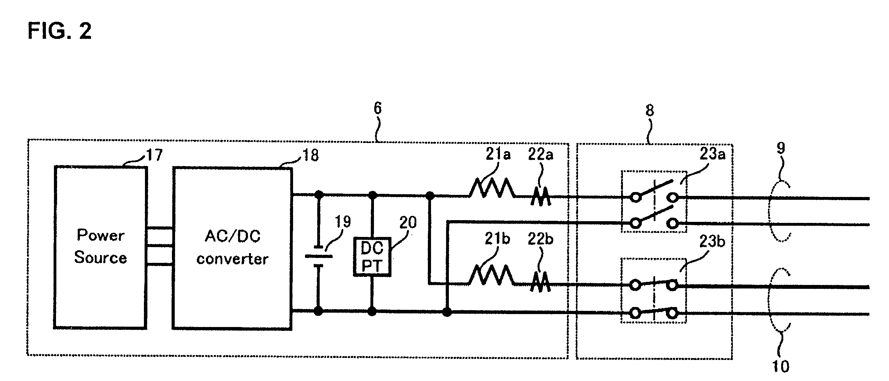

Fig. 2 is a view showing the details of the first selector according to a preferred embodiment of the present invention.
The power supply 6 is composed of an AC power source 17, an AC/DC converter 18, a smoothing condenser 19, a voltage detector 20, smoothing reactors 21a and 21b, and current detectors 22a and 22b.

The AC power source 17 assumes (1) a three-phase AC power obtained by driving a power generator via a diesel engine disposed on the train using light oil or the like as fuel, or (2) a single-phase AC power obtained from the exterior of the train via an overhead contact line and a power collector.

The AC/DC converter 18 converts the power generated via the AC power source 17 into DC power. A smoothing condenser 19 and smoothing reactors 21a and 21b constitute a filter circuit (low-pass filter), and the constants thereof are selected appropriately to reduce the conversion ripple generated by the AC/DC converter 18, then the power is supplied to the power feeding means (A) 9 and power feeding means (B) 10. The voltage information obtained via the voltage detector 20 and the current information obtained via the current detectors 22a and 22b are respectively entered to the traction system control unit 11 and used as control data required to control the power of the DC link in the AC/DC converter 18.

The selector 8 is composed of switching devices 23a and 23b. When supplying the power generated via the power supply 6 to the power feeding means (A) 9, the switching device 23a is turned on (conduction state).

When supplying the power generated via the power supply 6 to the power feeding means (B) 10, the switching device 23b is turned on (conduction state). By combining the on/off statuses of the switching devices 23a and 23b, the path for supplying power from the power supply 6 to the traction system can be selected between both the power feeding means (A) 9 and the power feeding means (B) 10, or either one of the power feeding means (A) 9 or the power feeding means (B) 10.

According to the present invention, multiple power supplies are provided to the trainset, wherein the multiple power supplies are connected via multiple power feeding means, and a first selector can select the output from the respective power supplies to be output to any one of the multiple power feeding means or any arbitrary combination of multiple power feeding means.

In other words, by providing a function to the traction system for a trainset having multiple power feeding means for effectively selecting a traction system which is the supply destination of power obtained via the multiple power feeding means, it becomes possible to provide a traction system having a high redundancy.

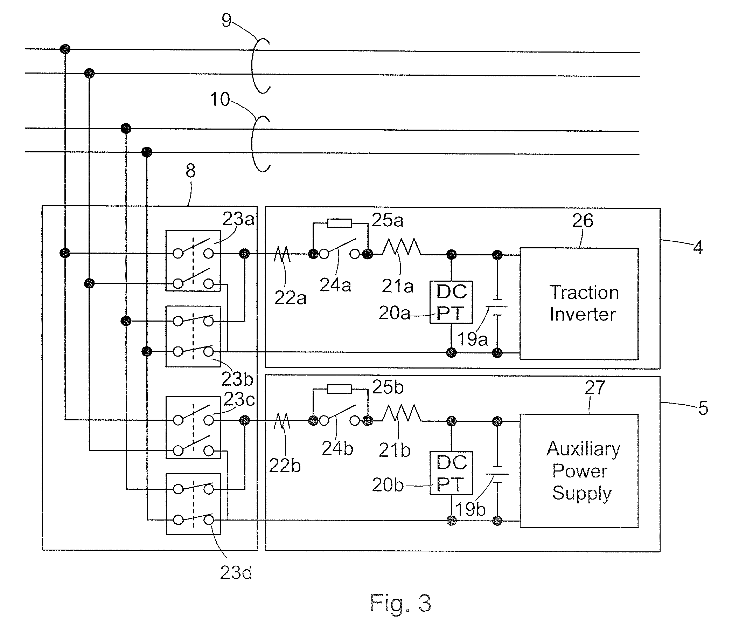

Fig. 3 is a view showing the details of second and third selectors according to a preferred embodiment of the present invention.

The selector 8 is composed of switching devices 23a, 23b, 23c and 23d.

When the switching device 23a is on, power is supplied from the power feeding means (A) 9 to the traction inverter 4.

When the switching device 23b is on, power is supplied from the power feeding means (B) 10 to the traction inverter 4.

When the switching device 23c is on, power is supplied from the power feeding means (A) 9 to the auxiliary power supply system 5.

When the switching device 23d is on, power is supplied from the power feeding means (B) 10 to the auxiliary power supply system 5.

By selecting the combination of on/off of the switching devices 23a and 23b, the power supply source of the traction inverter 4 can be selected between both the power feeding means (A) 9 and the power feeding means (B) 10 or either one of the power feeding means (A) 9 or the power feeding means (B) 10. Further, by selecting the combination of on/off of the switching devices 23c and 23d, the power supply source of the auxiliary power supply system 5 can be selected between both the power feeding means (A) 9 and the power feeding means (B) 10 or either one of the power feeding means (A) 9 or the power feeding means (B) 10.

The traction inverter 4 is composed of a traction inverter circuit 26, a smoothing condenser 19a, a voltage detector 20a, a smoothing reactor 21a, a current breaker 24a, a current decreasing resistor 25a, and a current detector 22a.

The input power to the traction inverter 4 is supplied from either both the power feeding means (A) 9 and the power feeding means (B) 10 or either one of the power feeding means (A) 9 or the power feeding means (B) 10, which is selected via the selector 8.

The current breaker 24a selects whether to enable or disable current flow to the current decreasing resistor 25a. The following describes the operation thereof.

When the traction inverter 4 is not to be operated, the current breaker 24a is opened.

When operating the traction inverter 4, at first, both or one of the switching devices 23a and 23b are turned on to connect the traction inverter 4 to a power supply system scheduled to feed power to the traction inverter 4. At this time, the power supplied from the power supply 6 is first charged via a current decreasing resistor 25a to the smoothing condenser 19a. After confirming that voltage between both ends of the smoothing condenser 19a has asymptotically approximated the voltage of the power supply system by charging the smoothing condenser 19a, the current breaker 24a is turned on. Thus, the power feed from the power supply system to the traction inverter circuit 26 is completed and the switching operation of the traction inverter circuit 26 is started, according to which the operation of a motor not shown is started. The voltage detector 20a detects the voltage between both ends of the smoothing condenser 19a, as mentioned earlier. The current detector 22a detects the current entered to the traction inverter 4 from the power supply system. The voltage information obtained from the voltage detector 20a and the current information obtained from the current detector 22b are each entered to the traction system control unit 11, and used as control data required to control a motor not shown in the traction inverter circuit 26.

The auxiliary power supply system 5 is composed of an auxiliary power supply circuit 27, a smoothing condenser 19b, a voltage detector 20b, a smoothing reactor 21b, a current breaker 24b, a current decreasing resistor 25b, and a current detector 22b.

The input power of the auxiliary power supply system 5 is supplied either from both the power feeding means (A) 9 and the power feeding means (B) 10 or from either the power feeding means (A) 9 or the power feeding means (B) 10, which is selected via the selector 8.

The current breaker 24b selects whether to enable or disable current flow to the current decreasing resistor 25b. The following is a description of the operation thereof.

When the auxiliary power supply 5 is not to be operated, the current breaker 24b is opened.

When operating the auxiliary power supply 5, at first, both or one of the switching devices 23c and 23d are turned on to connect the auxiliary power supply 5 to a power supply system scheduled to feed power thereto. At this time, the power supplied from the power supply 6 is first charged via a current decreasing resistor 25b to the smoothing condenser 19b. After confirming that voltage between both ends of the smoothing condenser 19b has asymptotically approximated the voltage of the power supply system by charging the smoothing condenser 19b, the current breaker 24b is turned on. Thus, the power feed from the power supply system to the auxiliary power supply circuit 27 is completed and the switching operation of the auxiliary power supply circuit 27 is started, according to which the operation of auxiliaries not shown is started. The voltage detector 20b detects the voltage between both ends of the smoothing condenser 19b as mentioned earlier. The current detector 22b detects the current entered to the auxiliary power supply device 5 from the power supply system. The voltage data obtained from the voltage detector 20b and the current data obtained from the current detector 22b are each entered to the traction system control unit 11, and used as control data required to control auxiliaries not shown in the auxiliary power supply circuit 27.

According to the present invention, an inverter means constituting the traction system can select the power system for receiving supply of power from the aforementioned multiple power feeding means arbitrarily via the second selector. Further, the auxiliary power supply means constituting the traction system can select the power system for receiving supply of power from the aforementioned multiple power feeding means arbitrarily via the third selector.

In other words, by providing to the traction system for a trainset having multiple power feeding means a function for effectively selecting the traction system being the supply destination of power obtained via the multiple power feeding means, it becomes possible to provide a traction system for a trainset having a high redundancy.

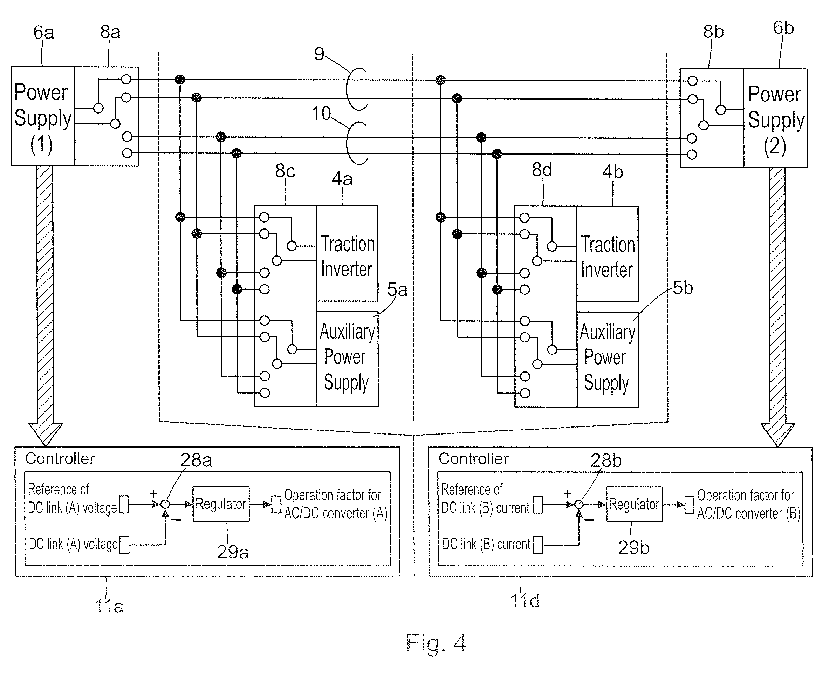

Fig. 4 is a view showing a first system for supplying power to the traction inverter and the auxiliary power supply system according to a preferred embodiment of the present invention.

A power supply 6a and a power supply 6b are mutually connected via a power feeding means (A) 9. This power supply path is set via a switching device constituting selectors 8a and 8b.

A traction inverter 4a receives supply of power from the power feeding means (A) 9 via the setting of a switching device constituting a selector 8c. A traction inverter 4b receives power from the power feeding means (A) 9 via the setting of a switching device constituting a selector 8d.

An auxiliary power supply system 5a receives supply of power from the power feeding means (A) 9 via the setting of a switching device constituting the selector 8c. An auxiliary power supply system 5b receives supply of power from the power feeding means (A) 9 via the setting of a switching device constituting the selector 8d.

According to the configuration described above, the power output from the power supply 6a and the power output from the power supply 6b can be supplied via the power feeding means (A) 9 to all the traction inverters 4a and 4b and the auxiliary power supply system 5a and 5b. For example, when the power feeding means (B) 10 is malfunctioning and cannot be used, the above-described configuration enables power to be supplied to the respective devices, so that it can be used as an emergency driving mode. At this time, since power from the power supply 6a and the power supply 6b are converged, the power may exceed the allowable current specification of the power feeding means (A) 9 depending on the electrical specification of the power feeding means (A) 9. At this time, by restricting the power supply to the traction inverters 4a and 4b and the auxiliary power supply system 5a and 5b to allow continuous driving operation via the minimum necessary traveling performance (maximum output) as an emergency driving mode, it becomes possible to prevent stalling of the train.

According further to the configuration of Fig. 4, the power supply 6a and the power supply 6b are connected via the power feeding means (A) 9, so that the power control of the power supply 6a and the power supply 6b should preferably be assigned to different functions so as to prevent interference. For example, a method for preventing interference of control between the power supply 6a and the power supply 6b can be realized by assigning the power supply 6a to perform constant voltage (AVR) control for regulating the voltage of the power feeding means (A) 9 and assigning the power supply 6b to perform constant current (ACR) control for compensating the current supply to the power feeding means (A) 9. The summary of these control systems are described in the following.

The traction system control unit 11a comprises a constant voltage (AVR) control section for controlling the power of the power supply 6a. A difference ΔVdc between a reference of DC link voltage Vdc_ref and a DC link voltage Vdc detected via the voltage detector 20a is computed in an adder-subtractor 28a, and an operation factor Ipa of the power supply 6a for asymptotically approximating the ΔVdc to zero is computed in a current regulator 29a.

The traction system control unit 11d comprises a constant current (ACR) control section for controlling the power of the power supply 6b. A difference ΔVdc between a reference of DC link current Idc_ref and a DC link current Idc detected via the current detector 22a is computed in an adder-subtractor 28b, and an operation factor Ipb of the power supply 6b for asymptotically approximating the ΔIdc to zero is computed in a current regulator 29b.

According to the present invention, multiple power supplies are provided to the trainset and the aforementioned multiple power supplies can be connected via multiple power feeding means, and the respective power supplies can be selected to output power to any one of the plurality of power feeding means or a number of arbitrary selected power feeding means via a first selector when outputting power to the multiple power feeding means. Further, the inverter means constituting the traction system can select a power system for feeding power thereto arbitrarily from the multiple power feeding means via a second selector. Moreover, the auxiliary power supply means constituting the traction system can select a power system for feeding power thereto arbitrarily from the multiple power feeding means via a third selector.

According further to the present invention, the ratio of load of the power generated by the multiple power supply means can be varied in response to the amount of power necessary for the whole trainset. Therefore, if the amount of power required within the whole trainset is extremely small, only a certain power supply can supply all the power required for the trainset and the other power supplies can be stopped, so as to effectively reduce the loss caused by the operation of the other power supplies.

In other words, by providing a function to the traction system for a trainset having multiple power feeding means for effectively selecting a traction system which is the supply destination of power obtained via the multiple power feeding means, it becomes possible to provide a highly efficient traction system having a high redundancy.

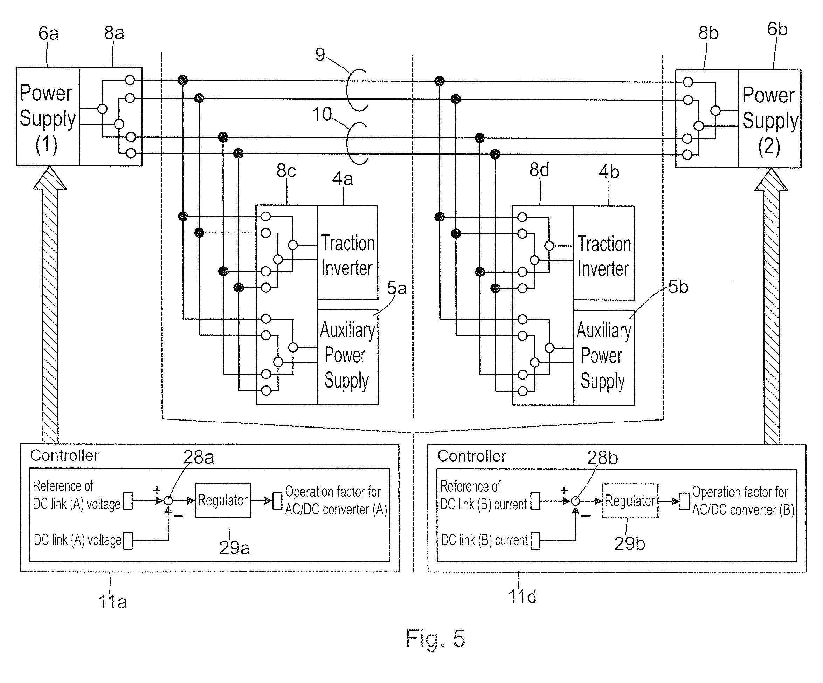

Fig. 5 is a view showing a second system for supplying power to the traction inverter and the auxiliary power supply system according to a preferred embodiment of the present invention.

A power supply 6a and a power supply 6b are mutually connected via a power feeding means (A) 9 and a power feeding means (B) 10. This power supply path is set via a switching device constituting selectors 8a and 8b.

A traction inverter 4a receives supply of power from both the power feeding means (A) 9 and the power feeding means (B) 10 via the setting of a switching device constituting a selector 8c. A traction inverter 4b receives power from both the power feeding means (A) 9 and the power feeding means (B) 10 via the setting of a switching device constituting a selector 8d.

An auxiliary power supply system 5a receives supply of power from both the power feeding means (A) 9 and the power feeding means (B) 10 via the setting of a switching device constituting the selector 8c. An auxiliary power supply system 5b receives supply of power from both the power feeding means (A) 9 and the power feeding means (B) via the setting of a switching device constituting the selector 8d.

According to the configuration described above, the power output from the power supply 6a and the power output from the power supply 6b can be supplied via the power feeding means (A) 9 and the power feeding means (B) 10 to all the traction inverters 4a and 4b and the auxiliary power supply systems 5a and 5b. Since power can be supplied via two lines of power feeding means to the traction inverters 4a and 4b and the auxiliary power supply system 5a and 5b by adjusting the ratio of load of power of the power supply 6a and the power supply 6b, for example, when power consumed by the traction inverters 4a and 4b and the auxiliary power supply system 5a and 5 is small, the power supply 6b can be stopped and the load can only be borne by the power supply 6a, by which small power operation of power supplies 6a and 6 can be prevented and equipment losses can be reduced. Moreover, when one of the power supplies 6a or 6b malfunctions and cannot be used, only the functioning power supply can be used to supply power to the traction inverters 4a and 4b and the auxiliary power supply system 5a and 5b. At this time, a case may be assumed in which necessary power required to perform normal driving cannot be supplied since only one power supply is capable of supplying power to the traction inverters 4a and 4b and the auxiliary power supply system 5a and 5b. At this time, by restricting the power supply to the traction inverters 4a and 4b and the auxiliary power supply system 5a and 5b to enable continuous driving operation via the minimum necessary traveling performance (maximum output) as an emergency driving mode, it becomes possible to prevent stalling of the train.

According further to the configuration of Fig. 5, since power is supplied from the power supply 6a and the power supply 6b to the traction inverters 4a and 4b and the auxiliary power supply systems 5a and 5b via multiple power supply means, the current path is dispersed. Thus, a large amount of current can be supplied to the traction inverters 4a and 4b and the auxiliary power supply systems 5a and 5b.

According further to the configuration of Fig. 5, the power supply 6a and the power supply 6b are connected via the power feeding means (A) 9 and the power feeding means (B) 10, so that the power control of the power supply 6a and the power supply 6b should preferably be assigned to different functions so as to prevent interference. For example, a method for preventing interference of control between the power supply 6a and the power supply 6b can be realized by assigning the power supply 6a to perform constant voltage (AVR) control for regulating the voltage of the power feeding means (A) 9 and the power feeding means (B) 10 and assigning the power supply 6b to perform constant current (ACR) control for compensating the current supply to the power feeding means (A) 9 and the power feeding means (B) 10. These control systems are summarized in the following.

The traction system control unit 11a comprises a constant voltage (AVR) control section for controlling the power of the power supply 6a. A difference ΔVdc between a reference of DC link voltage Vdc_ref and a DC link voltage Vdc detected via the voltage detector 20a is computed in an adder-subtractor 28a, and an operation factor Ipa of the power supply 6a for asymptotically approximating the ΔVdc to zero is computed in a current regulator 29a.

The traction system control unit 11d comprises a constant current (ACR) control section for controlling the power of the power supply 6b. A difference ΔIdc between a reference of DC link current Idc_ref and a DC link current Vdc which is a total of the current detected via the current detectors 22a and 22b is computed in an adder-subtractor 28b, and an operation factor Ipa of the power supply 6b for asymptotically approximating the ΔIdc to zero is computed in a current regulator 29b.

According to the present invention, multiple power supplies are provided to the trainset and the multiple power supplies can be connected via multiple power feeding means, wherein the respective power supplies can be selected to output power to any one of the plurality of power feeding means or a number of arbitrary selected power feeding means via a first selector when outputting power to the multiple power feeding means. Further, the inverter means constituting the traction system can select a power system for feeding power thereto from the multiple power feeding means arbitrarily via a second selector. Moreover, the auxiliary power supply means constituting the traction system can select a power system for feeding power thereto from the multiple power feeding means arbitrarily via a third selector.

According further to the present invention, the ratio of load of the power generated by the multiple power supply means can be varied in response to the amount of power necessary within the whole trainset. Therefore, if the amount of power required within the whole trainset is extremely small, one certain power supply can supply all the power required for the trainset the other power supplies can be stopped, so as to effectively reduce the loss caused by the operation of the other power supplies.

In other words, by providing to the traction system for a trainset having multiple power feeding means a function for effectively selecting a traction system which is the supply destination of power obtained via the multiple power feeding means, a highly efficient traction system having a high redundancy can be realized.

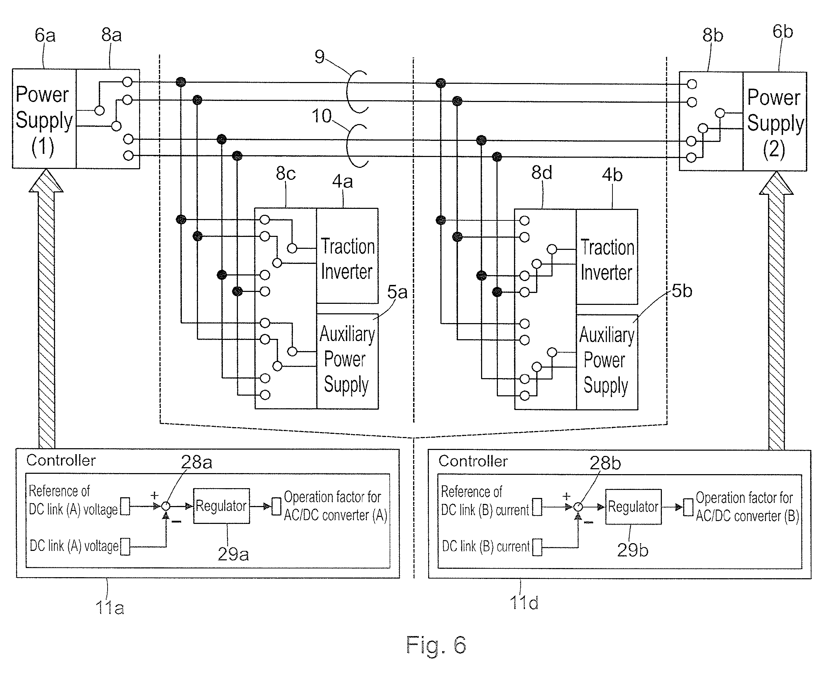

Fig. 6 is a view showing a third system for supplying power to the traction inverter and the auxiliary power supply system according to a preferred embodiment of the present invention.

A power supply 6a is connected to a power feeding means (A) 9, and a power supply 6b is connected via a power feeding means (B) 10. This power supply path is set via a switching device constituting selectors 8a and 8b.

A traction inverter 4a receives supply of power from the power feeding means (A) 9 via the setting of a switching device constituting a selector 8c. A traction inverter 4b receives power from the power feeding means (B) 10 via the setting of a switching device constituting a selector 8c.

An auxiliary power supply system 5a receives supply of power from the power feeding means (A) 9 via the setting of a switching device constituting the selector 8c. An auxiliary power supply system 5b receives supply of power from the power feeding means (B) 10 via the setting of a switching device constituting the selector 8c.

According to the configuration described above, the power output from the power supply 6a is supplied via the power feeding means (A) 9 to the traction inverter 4a and the auxiliary power supply system 5a . Further, the power output from the power supply 6b is supplied via the power feeding means (B) 10 to the traction inverter 4b and the auxiliary power supply system 5b. In other words, by fixing the devices (traction inverter 4 and auxiliary power supply system) for supplying power to the respective power supply devices, the power borne by the power supply 6a and the power supply 6b can be leveled. Moreover, if one of the traction inverters 4a and 4b or the auxiliary power supply systems 5a and 5b is malfunctioning and cannot be used, at least one of the traction inverters 4a or 4b and one of the auxiliary power supply system 5a or 5b can receive power supply. At this time, at least one of the two power supplies or one of the two inverters cannot be operated. Therefore, there may be cases in which power required for normal travel operation of the train cannot be supplied, but by restricting the power supply to the traction inverters 4a and 4b and the auxiliary power supply system 5a and 5b to enable continuous driving operation via the minimum necessary traveling performance (maximum output) as an emergency driving mode, it becomes possible to prevent stalling of the train.

According further to the configuration of Fig. 6, the power supply 6a supplies power to the power feeding means (A) 9 and the power supply 6b supplies power to the power feeding means (B) 10, so that the assigning of power of the power supply 6a and the power supply 6b to different functions is not necessarily required. For example, the power supply 6a can perform constant voltage (AVR) control for regulating the voltage of the power feeding means (A) 9 and the power supply 6b can perform constant voltage (AVR) control for regulating the voltage of the power feeding means (B) 10. These control systems are summarized in the following.

The traction system control unit 11a comprises a constant voltage (AVR) control section for controlling the power of the power supply 6a. A difference ΔVdc between a reference of DC link voltage Vdc_ref and a DC link voltage Vdc detected via the voltage detector 20a is computed in an adder-subtractor 28a, and an operation factor Ipa of the power supply 6a for asymptotically approximating the ΔVdc to zero is computed in a current regulator 29a.

The traction system control unit 11d comprises a constant voltage (AVR) control section for controlling the power of the power supply 6a. A difference ΔVdc between a reference of DC link voltage Vdc_ref and a DC link voltage Vdc detected via the voltage detector 20b is computed in an adder-subtractor 28b, and an operation factor Ipa of the power supply 6a for asymptotically approximating the ΔVdc to zero is computed in a current regulator 29b.

According to the present invention, multiple power supplies are provided to the trainset and the aforementioned multiple power supplies can be connected via multiple power feeding means, wherein the respective power supplies can be selected to output power to any one of the plurality of power feeding means or a number of arbitrary selected power feeding means via a first selector when outputting power to the multiple power feeding means. Further, the inverter means constituting the traction system can select a power system for feeding power thereto arbitrarily from the multiple power feeding means via a second selector. Moreover, the auxiliary power supply means constituting the traction system can select a power system for feeding power thereto arbitrarily from the multiple power feeding means via a third selector.

According further to the present invention, the ratio of load of the power generated by the multiple power supply means can be varied in response to the amount of power necessary within the whole trainset. Therefore, if the amount of power required within the whole trainset is extremely small, one certain power supply can supply all the power required for the trainset and the other power supplies can be stopped, so that the loss caused by the operation of the other power supplies can be effectively reduced.

In other words, by providing to the traction system for a trainset having multiple power feeding means a function for effectively selecting a traction system which is the supply destination of power obtained via the multiple power feeding means, it becomes possible to provide a highly efficient traction system having a high redundancy.

## Claims

1. A traction system for a trainset composed of a plurality of cars, **characterized in** comprising:
a plurality of power supplies for supplying power;
a plurality of power feeding means for connecting the plurality of power supplies;
a traction converting means for converting the power to a voltage/frequency variable AC power, and an AC motor driven by the AC power for generating traction force of the cars;
an auxiliary power supply system for supplying power to auxiliaries of the cars; and
a first selector for enabling power to be supplied from the respective power supplies to any one of the plurality of power feeding means or any arbitrary number of the plurality of power feeding means when power is output from the respective power supplies to the plurality of power feeding means.

2. The traction system for a trainset according to claim 1, further comprising
a second selector for enabling a power system for supplying power to the traction converting means to be selected arbitrarily from the plurality of power feeding means.

3. The traction system for a trainset according to claim 1, further comprising
a third selector for enabling a power system for supplying power to the auxiliary power supply system to be selected arbitrarily from the plurality of power feeding means.

4. The traction system for a trainset according to claim 1, further comprising
a second selector for enabling a power system for supplying power to the traction converting means to be selected arbitrarily from the plurality of power feeding means; and
a third selector for enabling a power system for supplying power to the auxiliary power supply system to be selected arbitrarily from the plurality of power feeding means.

5. The traction system for a trainset according to claim 2, **characterized in that**
the first selector and the second selector enable to select paths in which at least one of the plurality of power supplies and one of the plurality of traction conversion means are connected via the power feeding means.

6. The traction system for a trainset according to claim 3, **characterized in that**
the first selector and the third selector enable to select paths in which at least one of the plurality of power supplies and one of the plurality of auxiliary power supply systems are connected via the power feeding means.

7. The traction system for a trainset according to claim 4, **characterized in that**
the first selector and the second selector select paths in which at least one of the plurality of power supplies and one of the plurality of traction conversion means are connected via the power feeding means; and
the first selector and the third selector enable to select paths in which at least one of the plurality of power supplies and one of the plurality of auxiliary power supply systems are connected via the power feeding means.

8. The traction system for a trainset according to claim 2, **characterized in that**
the first selector and the second selector enable to select paths in which at least one of the plurality of power supplies and all of the plurality of traction conversion means are connected via the power feeding means.

9. The traction system for a trainset according to claim 3, **characterized in that**
the first selector and the third selector enable to select paths in which at least one of the plurality of power supplies and all of the plurality of auxiliary power supply systems are connected via the power feeding means.

10. The traction system for a trainset according to claim 4, **characterized in that**
the first selector, the second selector and the third selector enable to select paths in which all of the plurality of traction conversion means and all of the plurality of auxiliary power supply systems and at least one of the plurality of power supplies are connected via the power feeding means.

11. The traction system for a trainset according to claim 2 or claim 4, **characterized in that**
the first selector and the second selector enable to select paths in which at least the plurality of power supplies are connected respectively to different traction conversion means via the power feeding means.

12. The traction system for a trainset according to claim 3 or claim 4, **characterized in that**
the first selector and the third selector enable to select paths in which the plurality of power supplies are connected respectively to different auxiliary power supply systems via the power feeding means.

13. A trainset equipped with the traction system according to claims 1 through 12, **characterized in that**
one of the plurality of power supplies is a power supply for supplying power from an overhead contact line; and
the other one of the plurality of power supplies is a power generator driven by an engine.
